# EUROPEAN PATENT SPECIFICATION

(11) **EP 3 568 843 B1**
(45) Date of publication and mention of the grant of the patent: **13.11.2024**
(21) Application number: 18738971.3
(22) Date of filing: 09.01.2018
(51) Int. Cl.: G08G 1/01, G05D 1/00, G08G 1/0968, G08G 1/052, G08G 1/08, G08G 1/0967

(54) **CONNECTED AUTOMATED VEHICLE HIGHWAY SYSTEM**
AUTOBAHNSYSTEM FÜR VERBUNDENE AUTOMATISIERTE FAHRZEUGE
SYSTÈME POUR VÉHICULES AUTOMATISÉS CONNECTÉS SUR AUTOROUTE

(30) Priority: 10.01.2017 CN 201710014787; 17.05.2017 US 201762507453 P; 20.06.2017 US 201715628331
(43) Date of publication of application: 20.11.2019
(60) Divisional application: 24199864.0
(73) Proprietor: CAVH LLC, Fitchburg, Wisconsin 53711 (US)
(72) Inventor: RAN, Bin, Fitchburg, Wisconsin 53711 (US); CHENG, Yang, Fitchburg, Wisconsin 53711 (US); LI, Shen, Fitchburg, Wisconsin 53711 (US); DING, Fan, Fitchburg, Wisconsin 53711 (US); JIN, Jing, Fitchburg, Wisconsin 53711 (US); CHEN, Xiaoxuan, Fitchburg, Wisconsin 53711 (US); ZHANG, Zhen, Fitchburg, Wisconsin 53711 (US)
(74) Representative: Glawe, Delfs, Moll
(86) International application number: PCT/US2018/012961
(87) International publication number: WO 2018/132378

(56) References cited:
- WO-A1-2015/180090
- US-A1- 2008 161 986
- US-A1- 2010 256 836
- US-A1- 2016 231 746
- US-A1- 2016 232 788
- US-B1- 9 478 129
- US-B1- 9 495 874

## Description

### FIELD

The present invention relates generally to a comprehensive system providing full vehicle operations and control for connected and automated vehicles (CAV), and, more particularly, to a system controlling CAVs by sending individual vehicles with detailed and time-sensitive control instructions for vehicle following, lane changing, route guidance, and related information.

### BACKGROUND

Autonomous vehicles, vehicles that are capable of sensing their environment and navigating without or with reduced human input, are in development. At present, they are in experimental testing and not in widespread commercial use. Existing approaches require expensive and complicated on-board systems, making widespread implementation a substantial challenge.

From US 9 478 129 B1 a system for monitoring and/or controlling one or more vehicles is known. The system includes a plurality of road transceivers located along a vehicle roadway, wherein each road transceiver is operative to communicate with and/or sense the one or more vehicles.

In US 2016/232788 A1 the control of a vehicle based on crowdsourcing data from other vehicles is described.

WO 2015/180090 A1 relates to a remote driving assistance system for vehicles of any type that is provided upon request from a driver or an application. The system comprises a control center, a service transmitter and one or more sensors.

### SUMMARY

The present invention provides a comprehensive system providing full vehicle operations and control for connected and automated vehicle and highway systems by sending individual vehicles with detailed and time-sensitive control instructions. It is suitable for a portion of lanes, or all lanes of the highway. Those instructions are vehicle specific and they are sent by lowest level traffic control units (TCUs), which are optimized and passed from top level traffic control centers (TCCs). These TCC/TCUs are in a hierarchical structure and cover different levels of areas.

The invention is set out in the appended set of claims.

### DRAWINGS

FIG. **1** presents an exemplary system overview.
FIG. **2** presents an exemplary definition of a 3D CAVH (Connected Automated Vehicle Highway) system;
FIG. **3** illustrates an exemplary redistribution of driving tasks;
FIG. **4** provides a distribution of driving tasks for a typical AV (Automated Vehicle) based system;
FIG. **5** illustrates an exemplary distribution of driving tasks in an embodiment of the technology provided herein;
FIG. **6** illustrates exemplary system components;
FIG. **7** illustrates an exemplary TCU (Traffic Control Unit) subsystem;
FIG. **8** illustrates an exemplary RSU (Road Side Unit) subsystem;
FIG. **9** illustrates exemplary vehicle subsystem data flow;
FIG. **10** illustrates an exemplary communication subsystem;
FIG. **11** illustrates an exemplary point TCU;
FIG. **12** illustrates an exemplary segment TCU;
FIG. **13** illustrates an exemplary corridor TCC;
FIG. **14** illustrates an exemplary regional TCC;
FIG. **15** illustrates an exemplary macroscopic TCC (Traffic Control Center);
FIG. **16** illustrates an exemplary vehicle entering control;
FIG. **17** illustrates an exemplary vehicle exit control.
FIG. **18** illustrates an exemplary RSU Module Design.
FIG. **19** illustrates distance between carriageway markings and vehicles.
FIG. **20** illustrates angle of vehicles and road central lines.
FIG. **21** illustrates an exemplary overall traffic state.
FIG. **22** illustrates installation angle of microwave radar.
FIG. **23** illustrates an exemplary OBU module design.
FIG. **24** illustrates an exemplary TCC/ TCU structure map.
FIG. **25** presents an exemplary definition of a 3D CAVH (Connected Automated Vehicle Highway) system.

### DETAILED DESCRIPTION

Exemplary embodiments of the technology are described below. It should be understood that these are illustrative embodiments and that the invention is not limited to these particular embodiments.

### Legend

**101-**TCC&TCU subsystem: A hierarchy of traffic control centers (TCCs) and traffic control units (TCUs), which process information and give traffic operations instructions. TCCs are automatic or semi-automated computational centers that focus on data gathering, information processing, network optimization, and traffic control signals for regions that are larger than a short road segment. TCUs (also referred to as point TCU) are smaller traffic control units with similar functions, but covering a small freeway area, ramp metering, or intersections.
**102-**RSU subsystem: A network of Roadside Units (RSUs), which receive data flow from connected vehicles, detect traffic conditions, and send targeted instructions to vehicles. The RSU network focuses on data sensing, data processing, and control signal delivery. Physically, e.g. a point TCU or segment TCC can be combined or integrated with a RSU.
**103-**vehicle subsystem: The vehicle subsystem, comprising a mixed traffic flow of vehicles at different levels of connectivity and automation.
**104**-Communication subsystem: A system that provides wired / wireless communication services to some or all the entities in the systems.
**105**-Traffic data flow: Data flow contains traffic condition and vehicle requests from the RSU subsystem to TCC & TCU subsystem, and processed by TCC & TCU subsystem.
**106-**Control instructions set flow: Control instructions set calculated by TCC & TCU subsystem, which contains vehicle-based control instructions of certain scales. The control instructions set is sent to each targeted RSU in the RSU subsystem according to the RSU's location.
**107**-Vehicle data flow: Vehicle state data and requests from vehicle subsystem to RSU subsystem.
**108**-Vehicle control instruction flow: Flow contains different control instructions to each vehicle (e.g. advised speed, guidance info) in the vehicle subsystem by RSU subsystem.
**301-**Macroscopic Traffic Control Center: Automatic or semi-automated computational center covering several regions and inter-regional traffic control that focus on data gathering, information processing, and large-scale network traffic optimization.
**302**-Regional Traffic Control Center: Automatic or semi-automated computational center covering a city or urban area traffic control that focus on data gathering, information processing, urban network traffic and traffic control signals optimization.
**303-**Corridor Traffic Control Center: Automatic or semi-automated computational center covering a corridor with connecting roads and ramps traffic control that focus on corridor data gathering, processing, traffic entering and exiting control, and dynamic traffic guidance on freeway.
**304-**Segment Traffic Control Unit: Automatic or semi-automated computational center covering a short road segment Traffic control that focus on segment data gathering, processing and local traffic control.
**305**-Point Traffic Control Unit: covering a small freeway area, ramp metering, or intersections that focus on data gathering, traffic signals control, and vehicle requests processing.
**306-**Road Side Unit: receive data flow from connected vehicles, detect traffic conditions, and send targeted instructions to vehicles. The RSU network focuses on data sensing, data processing, and control signal delivery.
**307-**Vehicle subsystem: comprising a mixed traffic flow of vehicles at different levels of connectivity and automation.
**401-**Macro control target, neighbor Regional TCC information.
**403**-Regional control target, neighbor Corridor TCC information.
**405-**Corridor control target, neighbor Segment TCU information.
**407**-Segment control target, neighbor Point TCU information.
**402**-Regional refined traffic conditions, metrics of providing assigned control target.
**404-**Corridor refined traffic conditions, metrics of providing assigned control target.
**406-**Segment refined traffic conditions, metrics of providing assigned control target.
**408**-Point refined traffic conditions, metrics of providing assigned control target.
**601**-Vehicle Static & Dynamic Information:
   (1) Static Information
      1. Vehicle ID;
      2. Vehicle size info;
      3. Vehicle type info (including vehicle max speed, acceleration, and deceleration);
      4. Vehicle OBU info (Software information, Hardware information): Software of the OBU is designed in such a way that no user input is required and it can be seamlessly engaged with the portable RSU via Vehicle-to-Infrastructure (V2I) or Vehicle-to-Vehicle (V2V) communication, or both. The OBU hardware contains DSRC radio communication (or other communication technology) capability as well as Global Positioning System technology as compared with the RSU, which only needs to have DSRC radio communication (or other communication technology) capability.
   (2) Dynamic Information
      1. Timestamp;
      2. Vehicle lateral/longitudinal position;
      3. Vehicle speed;
      4. Vehicle OD information (including origin information, destination information, route choice information);
      5. Other vehicle necessary state info.
**602**-Vehicle control instructions:
   (1) Vehicle control instructions
      1. Lateral/Longitudinal position request at certain time;
      2. Advised speed;
      3. Steering and control info.
   (2) Guidance Information
      1. Weather;
      2. Travel time/Reliability;
      3. Road guidance.
**701-**Department of Transportation owned;
**702-**Communication Service Provider (CSP);
**703**-OEM;
**801-**Optimizer: Producing optimal control strategy, etc.;
**802-**Processor: Processing the data received from RSUs.

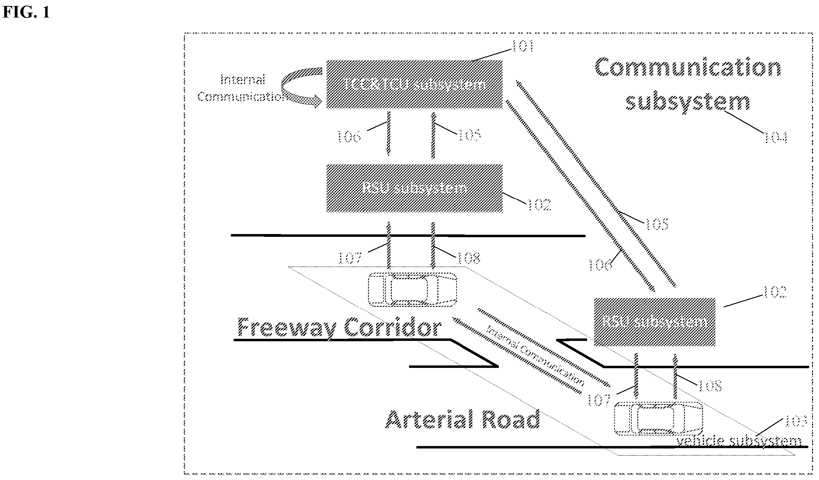

In some embodiments, as shown in FIG. **1****,** the system contains TCC/TCU subsystem **101,** RSU subsystem **102,** vehicle subsystem **103,** and communication subsystem **104.** TCC/TCU subsystem **101** is a hierarchical traffic control network of Traffic Control Centers (TCCs) and local traffic controller units (TCUs), which process traffic information from RSU subsystem **102** and give traffic operation instructions to RSU subsystem **102.** RSU subsystem **102** is a network of Roadside Units, which process traffic detection, communication, control instructions, and emissions. Vehicle subsystem **103** is a mixed traffic flow of vehicles at different levels of connectivity and automation, which send static, dynamic information and requests of vehicles to RSU subsystem **102,** and receive instructions from RSU subsystem. RSU subsystem **102** transfers vehicle data and requests from vehicle subsystem **103** into traffic information, and sends it to TCC/TCU subsystem **101** by communication system **104.** TCC/TCU subsystem **101** processes the information in the proper layer and sends operation instructions back to RSU subsystem **102.** RSU subsystem **102** screens and catalogues the operation instructions and sends the instructions **108** to each vehicle (e.g. advised speed, guidance information). Communication subsystem **104** is a wireless communication and security system with local and global connectivity, providing wired and wireless communication services to all the entities in the systems.

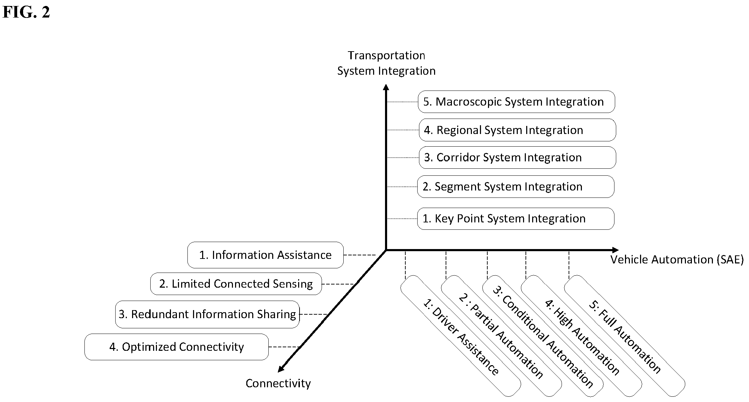

As shown in FIG. 2 (a), the attributes of such a system, regarding levels of system integration, automation, and connectivity, is defined as:
i. Vehicle Automation Level uses the SAE definition.
ii. Connectivity Level is defined based on information volume and content:
   1 . C0: No Connectivity
      Both vehicles and drivers do not have access to any traffic information.
   2. C1: Information Assistance
      Vehicles and drivers can only access simple traffic information from the Internet, such as aggregated link traffic states. Information is of certain accuracy, resolution, and of noticeable delay.
   3. C2: Limited Connected Sensing
      Vehicles and drivers can access live traffic information of high accuracy and unnoticeable delay, through connection with RSUs, neighbor vehicles, and other information providers. However, the information may not be complete.
   4. C3: Redundant Information Sharing
      Vehicles and drivers can connect with neighbor vehicles, traffic control device, live traffic condition map, and high-resolution infrastructure map. Information is with adequate accuracy and almost in real time, complete but redundant from multiple sources.
   5. C4: Optimized Connectivity
      Vehicles and drivers are provided with optimized information. Smart infrastructure can provide vehicles with optimized information feed.
iii. System Integration Level is defined based on coordination/optimization scope:
   1. S0: No Integration
      There is no integration between any systems.
   2. S1: Key Point System Integration (e.g., RSU based control for intersections, ramp metering)
      System integration occurs at intersection or ramp metering area. However, coordination/optimization scope is very small.
   3. S2: Segment System Integration (e.g., optimizing traffic on University Ave. within the campus)
      Scope becomes larger and more RSUs and vehicles are involved in the coordination and optimization. The traffic modes will remain the same.
   4. S3: Corridor System Integration (e.g., highway and local street integration, across different traffic modes)
      Coordination and optimization will cross different traffic modes and a whole freeway or arterial will be considered. RSUs and vehicles by share the information with each other will achieve system optimal in target scope.
   5. S4: Macroscopic System Integration (e.g., city or statewide)
      City or statewide coordination and optimization is achieved by connecting RSUs and vehicles in very large scope.

Unless specified otherwise, any of the embodiments described herein may be configured to operate with one or more of the Connectivity Levels in each combination with one or more of the System Integration Levels.

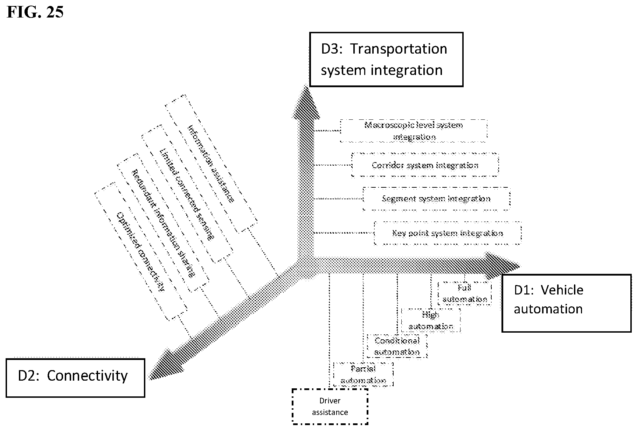

For example, in some embodiments, provided herein is a three-dimensional connected and automated vehicle-highway system (see e.g., Fig. 25). The exemplary system in Fig. 25 includes three dimensions: Dimension 1 (D1): vehicle automation, defines the development stages of connected and automated vehicles, adopting the SAE vehicle automation definition (e.g., driver assistance, partial automation, conditional automation, high automation, and full automation). Dimension 2 (D2): connectivity, defines the development stages of communication technologies, is about the communication among human, vehicles, and the traffic environment (e.g., information assistance, limited connected sensing, redundant information sharing, and optimized connectivity). Dimension 3 (D3): transportation system integration, defines the development stages of transportation system (e.g., key point system integration, segment system integration, corridor system integration, and macroscopic level system integration). This system provides a comprehensive system for the connected and automated vehicles and highways, by integrating, coordinating, controlling, managing, and optimizing all related vehicles, information services, facilities, and systems.

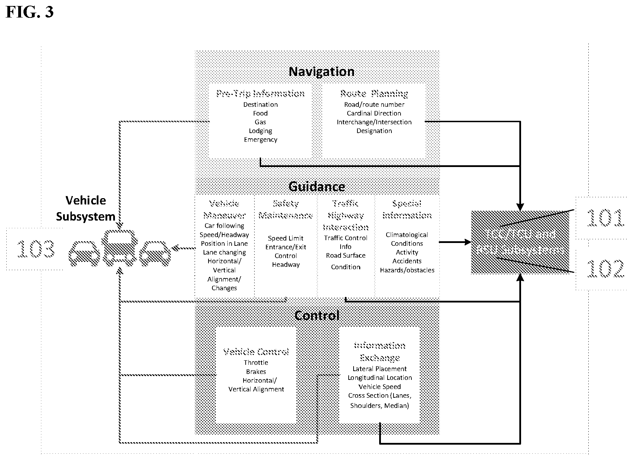

FIG. 3 shows (1) all the driving tasks among the originally defined three broad levels of performance: "Control", "Guidance", and "Navigation", according to the original definition of driving task by Lunenfeld and Alexander in 1990 (A User's Guide to Positive Guidance (3rd Edition) FHWA SA-90-017, Federal Highway Administration, Washington, DC). Those driving tasks are essential for all vehicles to drive safely from origins to destinations, and (2) how those tasks are distributed into and covered by the Vehicle Subsystem **103** and TCC/TCU **101**+ RSU **102** subsystems. In the "Navigation" level, the TCC/TCU **101**+ RSU **102** subsystems provide the instructions to the vehicles, including the "Pre-trip information" and "Route planning" needed for vehicles. In the "Guidance" level, the TCC/TCU **101+** RSU **102** subsystems provide the instructions and information for the Guidance tasks: Traffic Control/Road Condition, and Special Information. The Vehicle subsystem **103** fulfills the Vehicle Maneuver tasks, and monitors the Safety Maintenance tasks in addition to the operation of the TCC/TCU **101**+ RSU **102.** In the "Control" level, the TCC/TCU **101**+ RSU **102** subsystems provide data needs for the Information Exchange tasks. At the same time, the vehicle subsystem **103** fulfills Vehicle Control tasks, at the mechanic level, and monitors the surroundings, standing-by as the backup system.

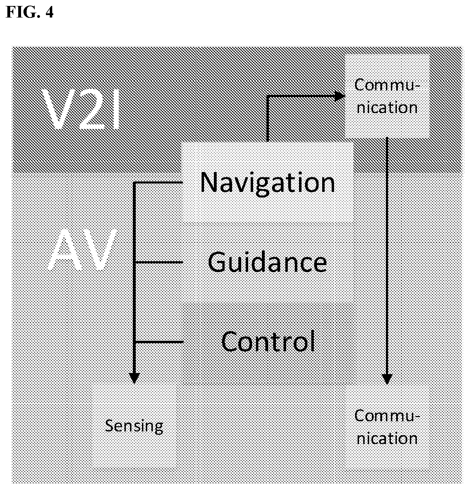

FIG. **4** shows the driving tasks distribution for the typical traditional Automated Vehicle (AV) based system solution. The Automated Vehicle, with the support of sensing technology like radars, cameras, etc., takes over most of the driving tasks among three levels while the "Vehicle-to-infrastructure" (V2I) technology provides support mostly in the "Navigation" level. The V2I typically uses communication technology like Dedicated Short Range Communications (DSRC) to fulfill its command and information exchange intentions. However, the traditional V2I technology has limitations. One of the major issue is that it contains only a single point-of-failure, which means that whenever the server or the link to the server fails, the system will fail immediately. The failure will lead to the loss of data, and endanger the whole system.

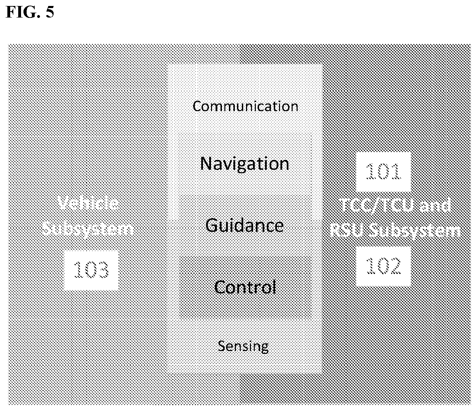

FIG. **5** shows the driving tasks distribution of embodiments of the present system. The Vehicle Subsystem **103,** together with the TCC /TCU **101** and RSU **102** Subsystem, takes over all the driving tasks among the three performance levels. The sensing and communication technology is used both by Vehicle Subsystem **103** and the TCC /TCU **101** and RSU **102** Subsystem to support the present system. The sensing serves in the level of both "Control" and "Guidance" while the communication serves in the "Navigation" and "Guidance" Levels. The collaboration of the Vehicle subsystem **103,** together with the TCC /TCU **101** and RSU **102** subsystem brings the system a redundancy, which provides the system the benefits of safety, reliability and cost effectiveness. Specifically, the dual-security system provides a fail-safe mechanism. When one of the subsystems fails, the others ensure the entire system working properly.

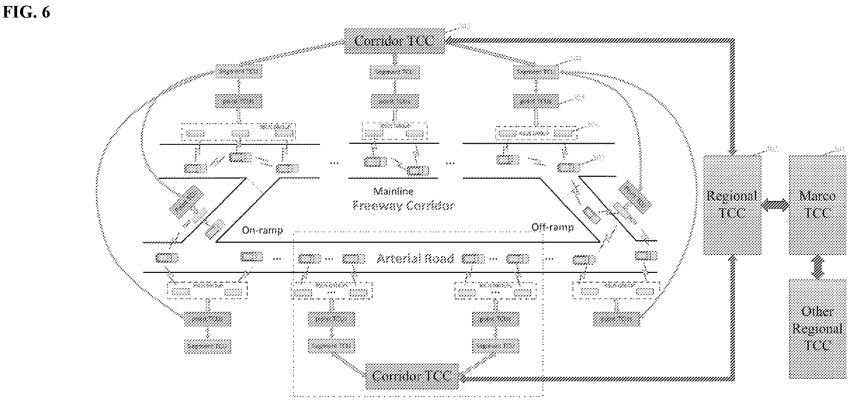

As shown in FIG. **6****,** the Fully-Controlled Connected Automated Vehicle Highway System contains components listed as follows: The Macroscopic Traffic Control Center (Marco TCC) 301, which is automatic or semi-automated computational center covering several regions and inter-regional traffic control that focus on data gathering, information processing, and large-scale network traffic optimization. The Regional Traffic Control Center (Regional TCC) 302, which is automatic or semi-automated computational center covering a city or urban area traffic control that focus on data gathering, information processing, urban network traffic control optimization. The Corridor Traffic Control Center (Corridor TCC) 303, which is automatic or semi-automated computational center covering a corridor with connecting roads and ramps traffic control that focus on corridor data gathering, processing, traffic entering and exiting control, and dynamic traffic guidance on freeway. The Segment Traffic Control Unit (Segment TCU) 304, which is a local automatic or semi-automated control unit covering a short road segment traffic control that focus on segment data gathering, processing and local traffic control. Point Traffic Control Unit (Point TCU) 305, which is an automatic control unit covering a small freeway area, ramp metering, or intersections that focus on data gathering, traffic signals control, and vehicle requests processing. The Marco TCC 301, Regional TCC 302, Corridor TCC 303, Segment TCU 304 and Point TCU 305 are the components of TCC/TCU subsystem 101. The Road Side Units (RSU 306), which represents small control units that receive data and requests from connected vehicles, detect traffic state, and send instructions to targeted vehicles. The network comprising RSUs 306 is the RSU subsystem 303, which focuses on data sensing, data processing, and control signal delivery. The connected and automated vehicles 307 is the basic element of vehicle subsystem 304, including vehicles at different levels of connectivity and automation. OBU (On-Board Unit with sensor and V2I communication units) network is embedded in connected and automated vehicles 307.

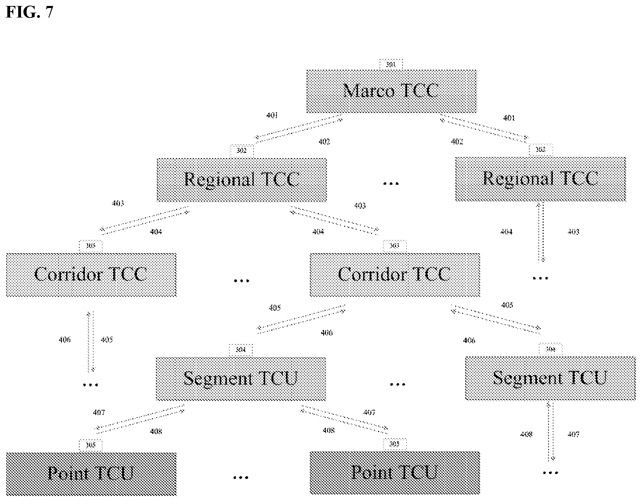

As shown in FIG. **7****,** the top level macroscopic traffic control center (TCC) **301** sends control target such as regional traffic control and boundary information **401** to second level regional TCC **302.** At the same time, regional TCC **302** sends refined traffic conditions **402** such as congestion condition back to macroscopic TCC **301,** which helps macroscopic TCC **301** to deal with large-scale network traffic optimization. Similar processes are carried out between every two consecutive levels. Regional TCC **302** sends control target and boundary information **403** to corridor TCC **303** and receives refined traffic condition **404.** Corridor TCC **303** sends control target and boundary information **405** to segment traffic control unit (TCU) **304** and receives refined traffic condition **406.** Segment TCU **304** sends control target and boundary information **407** to point TCUs **305** and receives point TCUs' **305** refined traffic conditions **408.**

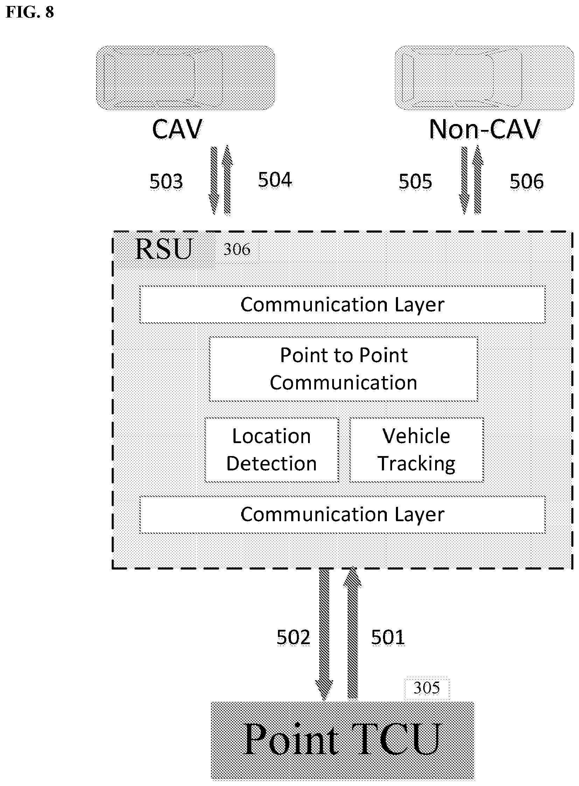

As shown in FIG. **8****,** Road side unit group **306** receives data from CAV and Non-CAV and detects traffic conditions. Then, Road side unit group **306** sends data to point traffic control unit **305.** After receiving all data from the Road side unit group **306** that is located in the covering area, point traffic control unit **305** optimizes traffic control strategy for all area and sends targeted instructions to Road side unit group **306.**

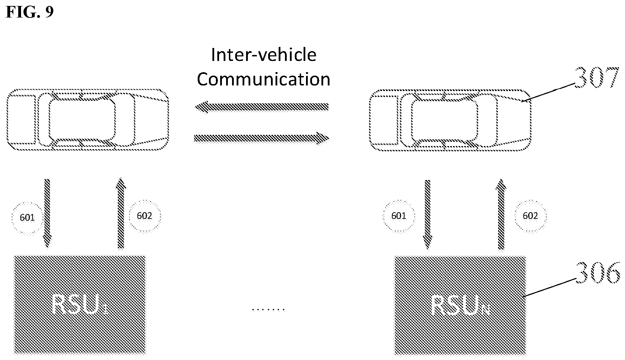

As shown in FIG. **9****,** road side unit group **306** receives data from connected vehicles **307,** detects traffic conditions, and sends targeted instructions to vehicles **307.** The RSU network focuses on data sensing, data processing, and control signal delivering. Information is also shared by different vehicles **307** that have communication with each other. Vehicles **307** also is a subsystem that can comprise a mixed traffic flow of vehicles at different levels of connectivity and automation.

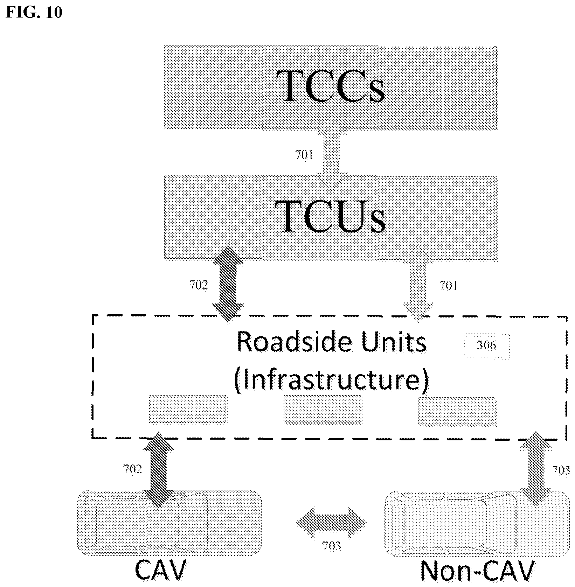

As shown in FIG. **10****,** Department of Transportation **701** controls the communication information between traffic control centers (TCC) and traffic control units (TCU). The information between TCUs and roadside units (RSU) is shared with Department of Transportation **701** and communication service provider **702.** The communication service provider **702** also controls data between roadside units and connected automated vehicle(CAV). The communication between non-CAV and CAV, and between RSU and non-CAV, is controlled by OEM **703.**

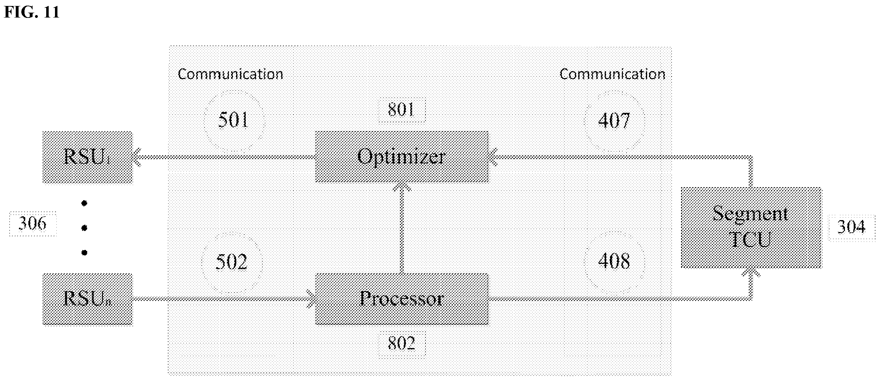

As shown in FIG. **11****,** RSU **306** collects traffic data from highway and passes the traffic information **502** to optimizer **801** and processor **802.** After receiving data, processor **802** processes it and generates current traffic conditions **408,** which is delivered to Segment TCU **304.** Segment TCU **304** decides the control target **407** to be controlled and informs optimizer **801** about it. Optimizer **801** optimizes the plan based on traffic information **502** and control target **407** and returns the vehicle-based control instructions **501** to RSU **306.**

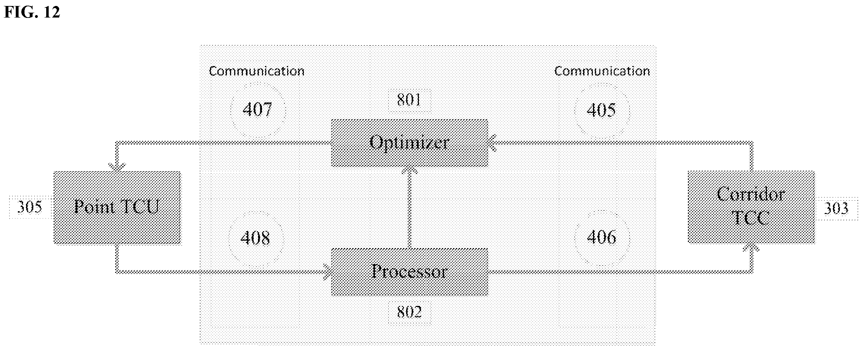

As shown in FIG. **12****,** Point TCU **305** generates current traffic conditions **408** and passes them to optimizer **801** and processor **802.** After receiving the condition information, processor **802** processes it and generates current segment traffic conditions **406,** which is delivered to Corridor TCC **303.** Corridor TCC **303** decides the control target **405** to be controlled and informs optimizer **801** about it. Optimizer **801** optimizes the plan based on traffic conditions **408** and control target **405** and returns control target **407** for Point TCU **305.**

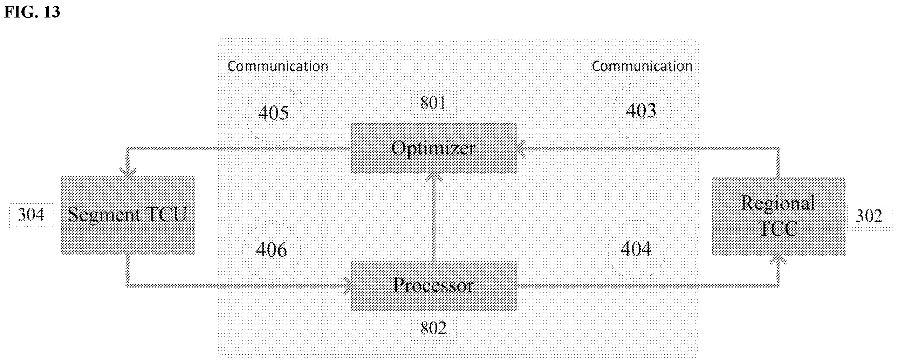

As shown in FIG. **13****,** Segment TCU **304** generates current segment traffic conditions **406** and passes them to optimizer **801** and processor **802.** After receiving the condition information, processor **802** processes it and generates current corridor traffic conditions **404,** which is delivered to Regional TCC **302.** Regional TCC **302** decides the control target **403** to be controlled and informs optimizer **801** about it. Optimizer **801** optimizes the plan based on segment traffic conditions **406** and control target **403** and returns control target **405** for Segment TCU **304.**

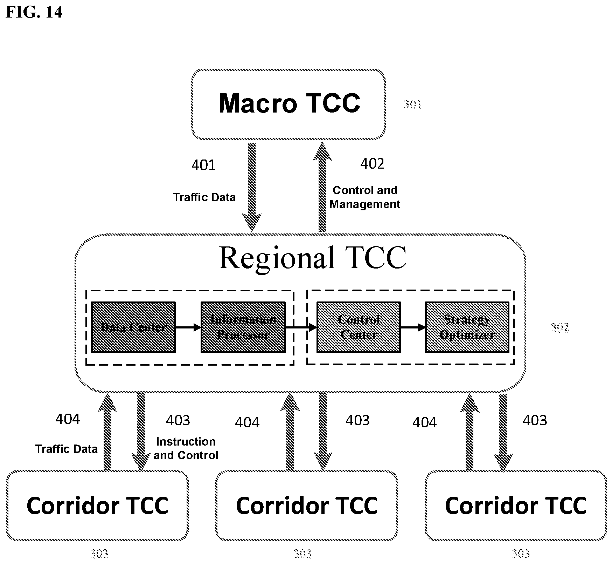

FIG. **14** shows the data and decision flow of Regional TCC **302.** Each Corridor TCC **303** collectively sends all the traffic data to the Regional TCC **302.** After the data is received by the data center, all the data is processed by the information processor. The information processor integrates traffic data and sends it to the control center. The control center makes draft-decision by a preset algorithm and sends the result to strategy optimizer. The optimizer simulates the decision and optimizes it and sends it to both Corridor TCC **303** and Macro TCC **301.** Macro TCC **301** shares traffic data from other Regional TCCs **302** nearby and system optimized decision back to the Regional TCC **302.**

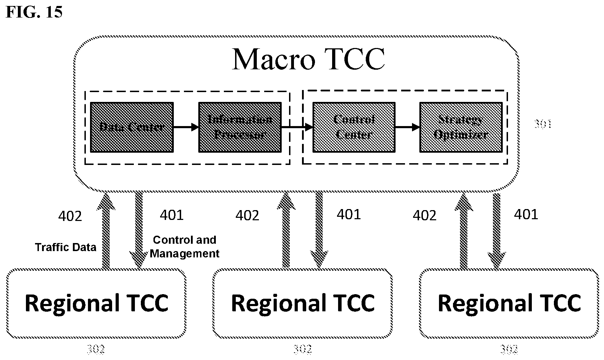

As shown in FIG. **15****,** each Regional TCC **302** sends the traffic data and local optimized strategy to the Macro TCC **301.** An information processor integrates all optimized strategies and traffic data. After that, the control center makes a draft-decision based on the traffic data from Regional TCCs **303.** The draft-decision is then processed by the strategy optimizer. A final system-optimized decision is made and sent back to the Regional TCCs **303.**

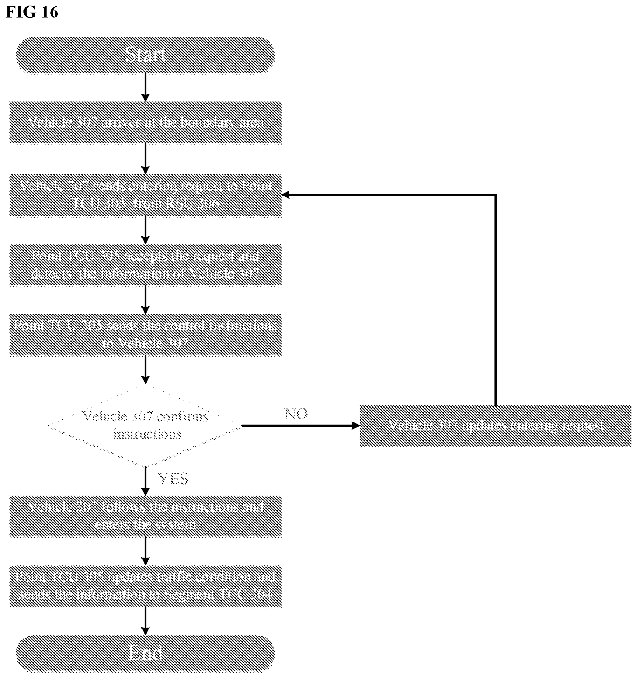

FIG. **16** illustrates the process of vehicles **307** entering the fully-controlled system. As shown in FIG. **16****,** vehicles **307** send the entering requests to RSUs **306** after arriving at the boundary area of the system. The boundary area refers to the area around the margin of a Segment TCU's **304** control range. RSUs **306** provide the entering requests to Point TCUs **305** and detect the information of vehicles 307, including static and dynamic vehicle information **6.2,** after Point TCUs **305** accept the entering requests. Point TCUs **305** formulate the control instructions **6.1** (such as advised speed, entering time, entering position, etc.) for vehicles **307** to enter the fully-controlled system and attempt to take over the control of vehicles **307,** based on the information detected by RSUs **306.** Vehicles **307** receive the control instructions **6.1** from RSUs **306** and process the instructions **6.1** with the inner subsystems to decide whether the instructions **6.1** can be confirmed. Vehicles **307** update and send the entering requests again if the control instructions **6.1** cannot be confirmed based on the judgment of the inner subsystems. Vehicles **307** drive following the control instructions **6.1** and enter the fully-control system if the control instructions **6.1** are confirmed. Point TCUs **305** take over the driving control of vehicles **307,** and vehicles **307** keep driving based on the control instructions **6.1** provided from the fully-controlled system. Point TCUs **305** update the traffic condition and send the refined information **4.8** to the Segment TCU **304** after vehicles **307** enter the fully-controlled system.

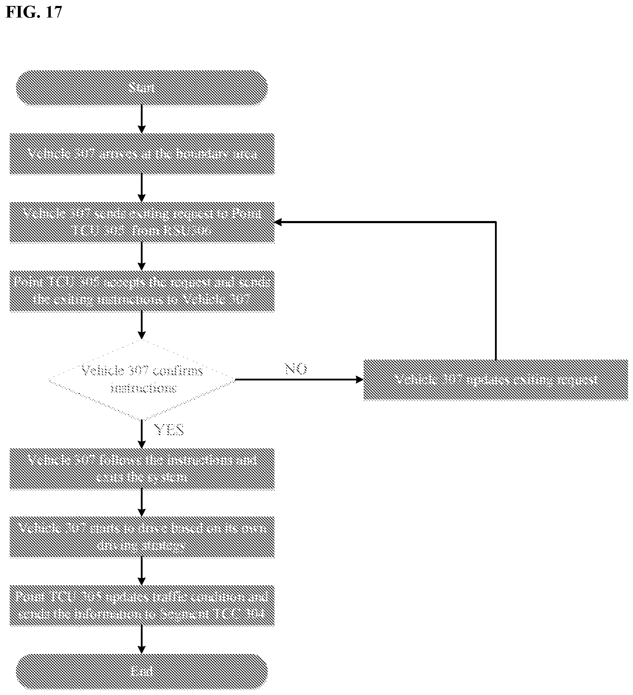

FIG. **17** illustrates the process of vehicles **307** exiting the fully-controlled system. As shown in FIG. **17****,** vehicles **307** send the exiting requests to RSUs **306** after arriving at the boundary area of the system. The boundary area refers to the area around the margin of a Segment TCU's **304** control range. RSUs **306** provide the exiting requests to Point TCUs **305.** Point TCUs **305** formulate the exiting instructions **6.1** (such as advised speed, exiting time, exiting position, etc.) for vehicles **307** to exit the fully-controlled system based on the information detected by RSUs **306.** Vehicles **307** receive the exiting instructions **6.1** from RSUs **306** and process the instructions **6.1** with the inner subsystems to decide whether the instructions **6.1** can be confirmed. Vehicles **307** update and send the entering requests again if the exiting instructions **6.1** can't be confirmed based on the judgment of the inner subsystems. Vehicles **307** drive following the exiting instructions **6.1** and exit the fully-control system if the exiting instructions **6.1** are confirmed. Point TCUs **305** terminate the driving control of vehicles **307,** and vehicles **307** start the autonomous driving and follow their own drive strategies after conducting the exiting constructions. Point TCUs **305** update the traffic condition and send the refined information **4.8** to the Segment TCU **304** after vehicles **307** exit the fully-controlled system.

### EXAMPLE

The following example provides one implementation of an embodiment of the systems and methods of the technology herein, designed for a freeway corridor.

### 1. RSU

### RSU Module Design

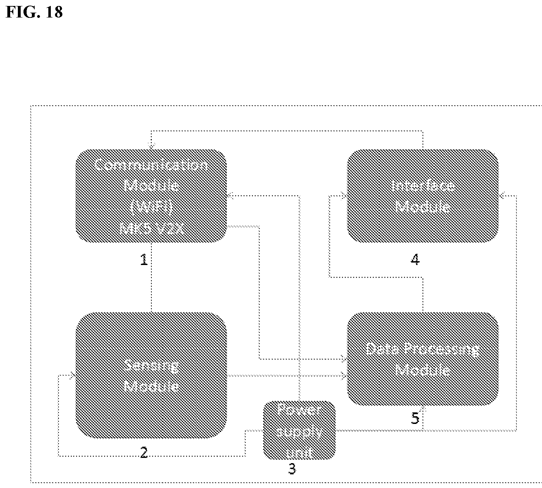

As shown in Figure 18, a RSU has two primary functions: 1) communication with vehicles and point traffic control units (TCUs), and 2) collecting traffic and vehicle driving environmental information. The sensing module (2) gathers information using various detectors described in detail in the following sections. The data processing module (5) uses data fusion technology to obtain six major feature parameters, namely speed, headway, acceleration / deceleration rates, the distance between carriageway markings and vehicles, angle of vehicles and central lines, and overall traffic status. Meanwhile, the communication module (1) also sends information received from vehicles and point TCUs to the data processing module (5) to update the result of the module. After six feature parameters are generated, the communication module (1) sends driving instructions to the OBU system installed on an individual vehicle, and shares the information with point TCUs. The interface module (4) will show the data that is sent to the OBU system. The power supply unit (3) keeps the power to maintain the whole system working.

### Communication module

### Communication with vehicles

### Hardware Technical Specifications:

- Standard Conformance: IEEE 802.11p - 2010
- Bandwidth: 10 MHz
- Data Rates: 10 Mbps
- Antenna Diversity CDD Transmit Diversity
- Environmental Operating Ranges: -40°C to + 55°C
- Frequency Band: 5 GHz
- Doppler Spread: 800 km/h
- Delay Spread: 1500ns
- Power Supply: 12/24V

Exemplary on-market components that may be employed are:
A. MK5 V2X from Cohda Wireless (http://cohdawireless.com)
B. StreetWAVE from Savari (http://savari.net/technology/road-side-unit/)

### Communication with point TCUs

### Hardware Technical Specifications:

- Standard Conformance: ANSI/TIA/EIA-492AAAA and 492AAAB
- Optical fiber
- Environmental Operating Ranges: -40°C to + 55°C

Exemplary on-market components that may be employed are: Optical Fiber from Cablesys
https://www.cablesys.com/fiber-patch-cables/?gclid=CjOKEQjwldzHBRCfg_aImKrf7N4BEiQABJTPKH_q2wbjNLGBhBV QVSBogLQMkDaQdMm5rZtyBaE8uuUaAhTJ8P8HAQ

### Sensing module

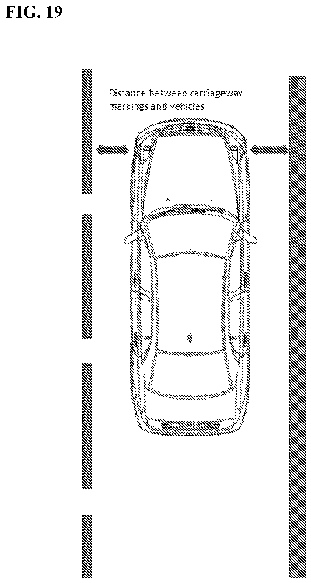

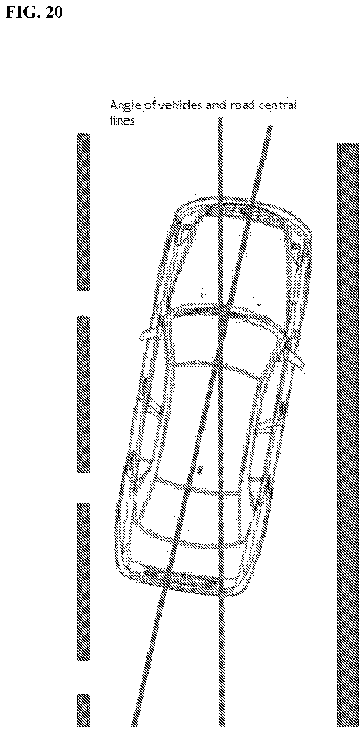

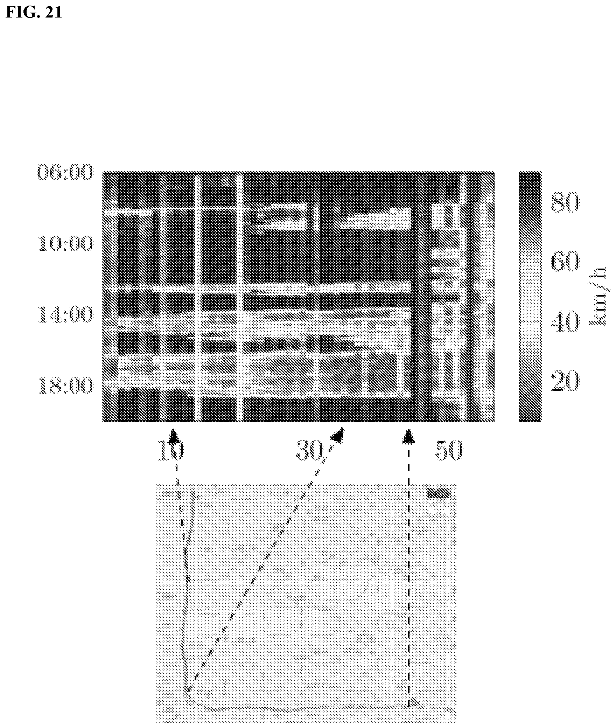

Six feature parameters are detected.
- Speed
   ∘ Description: Speed of individual vehicle
   ∘ Frequency: 5 Hz
   ∘ Error: less than 5 mile/h with 99% confidence
- Headway
   ∘ Description: Difference in position between the front of a vehicle and the front of the next vehicle
   ∘ Frequency: 5 Hz
   ∘ Error: less than 1 cm with 99% confidence
- Acceleration / Deceleration
   ∘ Description: Acceleration / Deceleration of individual vehicle
   ∘ Frequency: 5 Hz
   ∘ Error: less than 5 ft/ *s*² with 99% confidence
- Distance between carriageway markings and vehicles
   ∘ See, FIG. 19
   ∘ Frequency: 5Hz
   ∘ Error: Less than 5cm with 99% confidence
- Angle of vehicles and road central lines
   ∘ See, Fig. 20
   ∘ Frequency: 5Hz
   ∘ Error: less than 5° with 99% confidence
- Overall traffic state
   ∘ See, Fig. 21
   ∘ Frequency: 5Hz
   ∘ Error: less than 5% error with space resolution of 20 meters

### SESING_MODULE_TYPE_A (LIDAR + Camera + Microwave radar):

### a. LIDAR

### Hardware technical Specifications

- Effective detection distance greater than 50 m
- Scan rapidly over a field of view of 360°
- Detection error is 99% confidence within 5cm

Exemplary on-market components that may be employed are:
A. R-Fans_16 from Beijing Surestar Technology Co. Ltd http://www.isurestar.com/index.php/en-product-product.html#9
B. TDC-GPX2 LIDAR of precision-measurement-technologies http://pmt-fl.com/
C. HDL-64E of Velodyne Lidar
   http://velodynelidar.com/index.html

### Software technical Specifications

- Get headway between two vehicles
- Get distance between carriageway markings and vehicles
- Get the angel of vehicles and central lines.

Exemplary on-market components that may be employed are: LIDAR in ArcGIS

### b. Camera

### Hardware technical Specifications

- 170 degree high-resolution ultra-wide-angle
- Night Vision Capable

### Software technical Specifications

- The error of vehicle detection is 99% confidence above 90%
- Lane detection accuracy is 99% confidence above 90%
- Drivable path extraction
- Get acceleration of passing vehicles

Exemplary on-market components that may be employed are: EyEQ4 from Mobileye http://www.mobileye.com/our-technology/
The Mobileye system has some basic functions: vehicle and pedestrian detection, traffic sign recognition, and lane markings identification (see e.g., barrier and guardrail detection, US20120105639A1, image processing system, EP2395472A1, and road vertical contour detection, US20130141580A1. See also US20170075195A1 and US20160325753A1.

The sensing algorithms of Mobileye use a technique called Supervised Learning, while their Driving Policy algorithms use Reinforcement Learning, which is a process of using rewards and punishments to help the machine learn how to negotiate the road with other drivers (e.g., Deep learning).

### a. Microwave radar

### Hardware technical Specifications

- Reliable detection accuracy with isolation belt
- Automatic lane segmentation on the multi-lane road
- Detection errors on vehicle speed, traffic flow and occupancy are less than 5%
- Ability to work under temperature lower than -10°C

Exemplary on-market components that may be employed are: STJ1-3 from Sensortech
http://www.whsensortech.com/

### Software technical Specifications

- Get speed of passing vehicles
- Get volume of passing vehicles
- Get acceleration of passing vehicles

In some embodiments, data fusion technology is used such as the product from DF Tech to obtain six feature parameters more accurately and efficiently, and to use a backup plan in case one type of detectors has functional problems.

### SESING_MODULE_TYPE_B (Vehicle ID Recognition Device):

### Hardware technical Specifications

- Recognize a vehicle based on OBU or vehicle id.
- Allowable speed of vehicle movement is up to 150km/h
- Accuracy in daylight and at nighttime with artificial illumination is greater than 90% with 99% confidence
- Distance from system to vehicle is more than 50m

Exemplary on-market components that may be employed are:
A. Products for Toll Collection - Mobility - SiemensProducts for Toll Collection - Mobility - Siemens
   https://www.mobility.siemens.com/mobility/global/en/urban-mobility/road-solutions/toll-systems-for-cities/products-for-toll-collection/pages/products-for-toll-collection.aspx
B. Conduent^{™} - Toll Collection SolutionsConduent^{™} - Toll Collection Solutions https://www.conduent.com/solution/transportation-solutions/electronic-toll-collection/

### Software technical Specifications

- Recognize the vehicle and send the information to the database to link the six feature parameter to each vehicle.

Exemplary on-market components that may be employed are: Siemens.

### Data Processing Module

The function of data processing module is to fuse data collected from multiple sensors to achieve the following goals.
- Accurate positioning and orientation estimation of vehicles
- High resolution-level traffic state estimation
- Autonomous path planning
- Real time incident detection

Exemplary on-market components that may be employed are: External Object Calculating Module (EOCM) in Active safety systems of vehicle (Buick LaCrosse). The EOCM system integrates data from different sources, including a megapixel front camera, all-new long-distance radars and sensors to ensure a faster and more precise decision-making process. (See e.g., US8527139 B1).

### Installation:

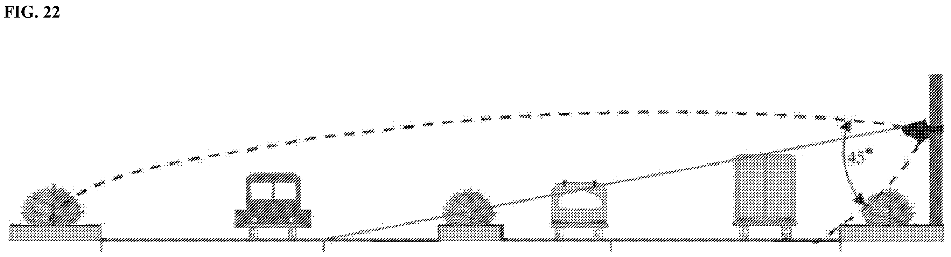

In some embodiments, one RSU is installed every 50m along the connected automated highway for one direction. The height is about 40 cm above the pavement. A RSU should be perpendicular to the road during installation. In some embodiments, the installation angle of RSU is as shown in Fig. 22.

### Vehicle/OBU

### OBU Module Design

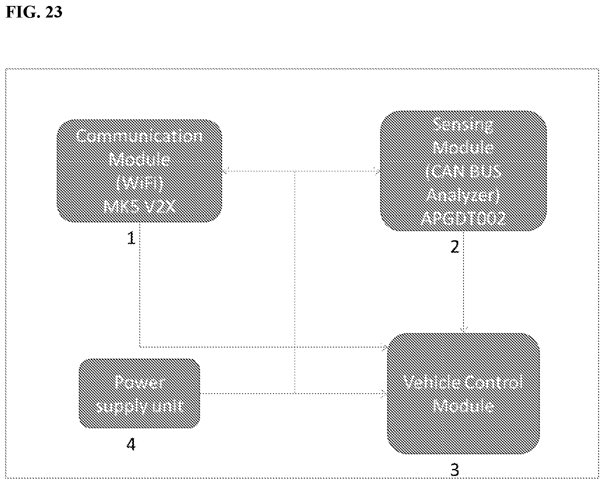

Description of an example of OBU (Fig. 23).

The communication module (1) is used to receive both information and command instruction from a RSU. The data collection module (2) is used to monitor the operational state, and the vehicle control module (3) is used to execute control command.

### Communication module

### OBU installation

### Technical Specifications:

- Standard Conformance: IEEE 802.11p - 2010
- Bandwidth: 10 MHz
- Data Rates: 10 Mbps
- Antenna Diversity CDD Transmit Diversity
- Environmental Operating Ranges: -40°C to + 55°C
- Frequency Band: 5 GHz
- Doppler Spread: 800 km/h
- Delay Spread: 1500ns
- Power Supply: 12/24V

Exemplary on-market components that may be employed are:
A. MK5 V2X from Cohda Wireless
   http://cohdawireless.com/
B. StreetWAVE from Savari
   http://savari.net/technology/road-side-unit/

### Data collection module

The data collection module is used to monitor the vehicle operation and diagnosis.

### OBU_TYPE_A (CAN BUS Analyzer)

### Hardware technical Specifications

- Intuitive PC User Interface for functions such as configuration, trace, transmit, filter, log etc.
- High data transfer rate

Exemplary on-market components that may be employed are:
A. APGDT002, Microchip Technology Inc.
   http://www.microchip.com/
B. Vector CANalyzer9.0 from vector
   https://vector.com

### Software technical Specifications

- Tachograph Driver alerts and remote analysis.
- Real-Time CAN BUS statistics.
- CO2 Emissions reporting.

Exemplary on-market components that may be employed are: CAN BUS ANALYZER USB V2.0

### Vehicle control module

### Remote control system

### Technical Specifications

- Low power consumption
- Reliable longitudinal and lateral vehicle control

Exemplary on-market components that may be employed are: Toyota's remote controlled autonomous vehicle. In Toyota's system, the captured data can be sent to a remote operator. The remote operator can manually operate the vehicle remotely or issue commands to the autonomous vehicle to be executed by various vehicle systems. (See e.g., US9494935 B2).

### Installation

### OBU_TYPE_A (CAN BUS Analyzer)

- Connect the tool to the CAN network using the DB9 connector or the screw in terminals

### TCU/TCC

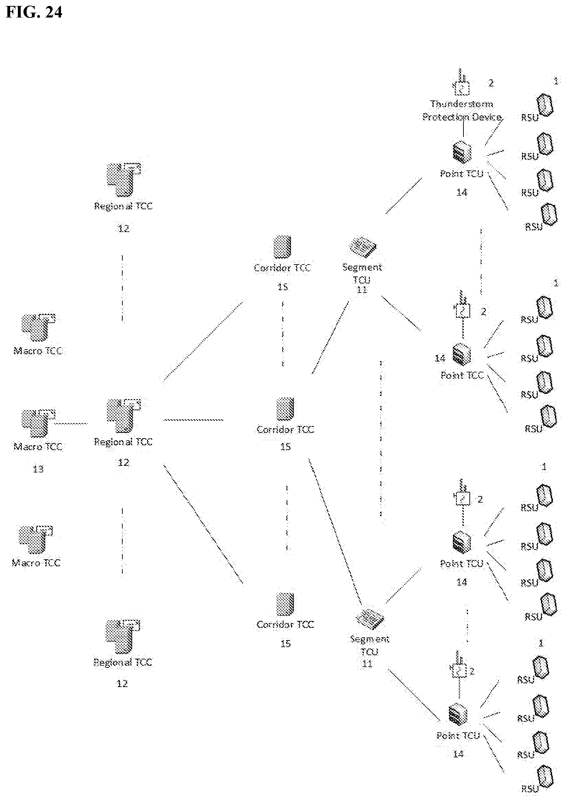

See e.g., Fig. 24. The TCC/ TCU system is a hierarchy of traffic control centers (TCCs) and traffic control units (TCUs), which process information and give traffic operations instructions. TCCs are automatic or semi-automated computational centers that focus on data gathering, information processing, network optimization, and traffic control signals for a region that is larger than short road segments. TCUs are smaller traffic control units with similar functions, but covering a small freeway area, ramp metering, or intersections. There are five different types of TCC/TCU. A point TCU collects and exchanges data from several RSUs. A segment TCC collects data and exchanges data from multiple Point TCUs, optimizes the traffic flow, and controls Point TCU to provide control signal for vehicles. A Corridor TCC collects data from multiple RSUs and optimizes the traffic in a corridor. A Regional TCC collects data from multiple corridors and optimizes traffic flow and travel demand in a large area (e.g. a city is covered by one regional TCC). A Macro TCC collects data from multiple Regional TCCs and optimizes the travel demand in a large-scale area.

For each Point TCU, the data is collected from a RSU system (1). A Point TCU (14) (e.g. ATC-Model 2070L) with parallel interface collects data from a RSU. A thunderstorm protection device protects the RSU and Road Controller system. The RSU unites are equipped at the road side.
A Point TCU (14) communicates with RSUs using wire cable (optical fiber). Point TCUs are equipped at the roadside, which are protected by the Thunderstorm protector (2). Each point TCU (14) is connected with 4 RSU unites. A Point TCU contains the engineering server and data switching system (e.g. Cisco Nexus 7000). It uses data flow software.

Each Segment TCU (11) contains a LAN data switching system (e.g. Cisco Nexus 7000) and an engineering server (e.g. IBM engineering server Model 8203 and ORACL data base). The Segment TCU communicates with the Point TCU using wired cable. Each Segment TCU covers the area along 1 to 2 miles.

The Corridor TCC (15) contains a calculation server, a data warehouse, and data transfer units, with image computing ability calculating the data collected from road controller (14). The Corridor TCC controls segment TCU (e.g., the Corridor TCC covers a highway to city street and transition). Traffic control algorithms are used to control segment and point TCUs (e.g., adaptive predictive traffic control algorithm). The data warehouse is a database, which is the backup of the corridor TCC (15). The Corridor TCC (15) communicates with segment TCU (11) using wired cord. The calculation work station (KZTs-M1) calculates the data from segment TCU (15) and transfers the calculated data to Segment TCU (11). Each corridor TCC covers 5-20 miles.

Regional TCC (12). Each regional TCC (12) controls multiple Corridor TCCs in a region (e.g. covers the region of a city) (15). Regional TCCs communicate with corridor TCCs using wire cable (e.g. optical fiber).

Macro TCC (13). Each Macro TCC (13) controls multiple regional TCCs in a large-scale area (e.g., each state will have one or two Macro TCCs) (12). Macro TCCs communicate with regional TCCs using wire cable (e.g. optical fiber).

### High resolution map and vehicle location

### High resolution map

### Technical Specifications

- Show carriageway markings and other traffic signs that are printed on roads correctly and clearly.
- As changes occur in the road network, the map will update the information by itself.
- Map error is less than 10 cm with 99% confidence.

Exemplary on-market components that may be employed are:
A. HERE
   https://here.com/en/products-services/products/here-hd-live-map

The HD maps of HERE allow highly automated vehicles to precisely localize themselves on the road. In some embodiments, the autonomous highway system employs maps that can tell them where the curb is within a few centimeters. In some embodiments, the maps also are live and are updated second by second with information about accidents, traffic backups, and lane closures.

### Differential Global Positioning System:

### Hardware technical Specifications

- Locating error less than 5 cm with 99% confidence
- Support GPS system

Exemplary on-market components that may be employed are:
A. Fleetmatics
   https://www.fleetmatics.com/
B. Teletrac Navman
   http://drive.teletracnavman.com/
C. Fleetmatics
   http://lead.fleetmatics.com/

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Certain steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Non-claimed embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Non-claimed embodiments may also relate to a product that is produced by a computing process described herein. Such a product may comprise information resulting from a computing process, where the information is stored on a non-transitory, tangible computer readable storage medium and may include any embodiment of a computer program product or other data combination described herein.

## Claims

1. A transportation management system that provides full vehicle operations and control for connected and automated vehicle and highway systems by sending individual vehicles with detailed and time-sensitive control instructions for vehicle following, lane changing, route guidance, and related information, said transportation management system comprising:
a) a hierarchy of traffic control centers/traffic control units, TCCs/TCUs, (101), that process information and give traffic operations instructions, wherein said TCCs and TCUs are automatic or semi-automated computational modules that provide data gathering, information processing, network optimization, and traffic control, comprising one or more macroscopic TCCs (301) covering several regions and inter-regional traffic control, one or more regional TCCs (302) covering city or urban area traffic control, one or more corridor TCCs (303) covering corridor with connecting roads and ramps traffic control, one or more segment TCUs (304) covering road segment traffic control, one or more point TCUs (305) covering freeway area, ramp metering, or intersections traffic control, and a network (102) of road side units, RSUs, (306),
1) wherein said macroscopic TCCs (301) provide for data gathering, information processing, and large-scale network traffic optimization, process information from the regional TCCs (302) and provide control targets to the regional TCCs (302);
2) wherein said regional TCCs (302) provide for data gathering, information processing, urban network traffic and traffic control signals optimization, process information from the corridor TCCs (303) and provide control targets to the corridor TCCs (303);
3) wherein said corridor TCCs (303) provide for corridor data gathering, processing, traffic entering and exiting control, and dynamic traffic guidance on freeway, process information from the macroscopic TCUs and the segment TCUs (304) and provide control targets to the segment TCUs (304);
4) wherein said segment TCUs (304) provide for segment data gathering, processing and local traffic control, process information from the corridor TCCs (303) and the point TCUs (305) and provide control targets to the point TCUs (305); and
5) wherein said point TCUs (305) provide for data gathering, traffic signals control, and vehicle requests processing, process information from the segment TCUs (304) and the RSUs (306) and provide vehicle-based control instructions to one or more RSU (306);
b) wherein the RSU (306) receives data flow from connected vehicles, detect traffic conditions, and send targeted instructions to vehicles, wherein said network (102) of RSUs provides data sensing, data processing, control signal delivery, and information distribution, and wherein an RSU (306) of the RSU network (102) can be combined or integrated with a TCU;
c) a vehicle sub-system (103, 307) comprising a mixed traffic flow of vehicles at different levels of connectivity and automation; and
d) communication systems (104) that provide wired and wireless communication services to all the entities in the transportation management system.

2. The transportation management system of claim 1, wherein the transportation management system is configured to be operational on a portion of the available lane or on all the lanes of a highway.

3. The transportation management system of any one of claims 1-2, wherein information is customized for each individual vehicle served by the system; said information includes weather, pavement conditions, and estimated travel time; and said information includes vehicle control instructions selected from the group consisting of speed, spacing, lane designation, and routing.

4. The transportation management system of any one of claims 1-3, wherein information is sent from an upper level TCC/TCU to a lower level TCC/TCU and includes one or more of
a) a desirable speed;
b) a desirable spacing of vehicles;
c) a desirable traffic volume;
d) a desirable traffic split at access points; and
e) traffic signal timing parameters.

5. The transportation management system of any one of claims 1-4, wherein said system employs hardware comprising one or more of:
a) a power supply;
b) traffic sensors;
c) wired and wireless communication modules; and
d) a data storage device and database.

6. The transportation management system of any one of claims 1-5, configured for use with a sensor selected from the group consisting of
a) a microwave radar system;
b) an inductive loop system;
c) an infrared system;
d) a video camera system; and
e) a LiDAR system.

7. The transportation management system of any one of claims 1-6, wherein said macroscopic TCC (301):
a) provides control targets to regional TCCs (302);
b) collects related data from regional TCCs (302);
c) archives historical data in a data center to support information processing and a strategy optimizer;
d) provides an automatic or semi-automated computational center that provides data gathering, information processing, network optimization, and traffic control signals; and
e) controls multiple regional TCCs (302) in a large scale area and communicates with regional TCCs (302) using high volume capacity and low latency communication media.

8. The transportation management system of any one of claims 1-6, wherein said regional TCC (302):
a) provides control targets to corridor TCCs (303);
b) collects related data from corridor TCCs (303);
c) archives historical data in a data center to support the information processing and a strategy optimizer;
d) provides an automatic or semi-automated computational center that provides data gathering, information processing, network optimization, and traffic control signals for a region; and
e) controls multiple corridor TCCs (303) within its coverage and communicates with corridor TCCs (303) and a macroscopic TCC (301) using high volume capacity and low latency communication media.

9. The transportation management system of any one of claims 1-6, wherein said corridor TCC (303):
a) provides control targets to segment TCUs (304);
b) collects related data from segment TCUs (304);
c) provides optimizer and processor modules to process information and provide control targets;
d) provides an automatic or semi-automated computational center that provides data gathering, information processing, network optimization, and traffic control signals for a long roadway corridor; and
e) provides a calculation server, a data warehouse, data transfer units, and computing ability for processing image and sensor data.

10. The transportation management system of any one of claims 1-6, wherein said segment TCU (304):
a) provides control targets to point TCUs (305);
b) collects related data from point TCUs (305);
c) provides optimizer and processor modules to process information and provide control targets;
d) provides traffic control for a small roadway area; and
e) contains LAN data switching system and an engineer server and communicates with the point TCC (305) using wired or wireless communication media.

11. The transportation management system of any one of claims 1-6, wherein said point TCU (305):
a) provides vehicle-specific control instructions to RSUs (306);
b) collects related data from point RSUs (306);
c) provides optimizer and processor modules to process information and provide control targets; and
d) provides traffic control for a short distance of a roadway, ramp metering, or intersections; and
e) communicates with one or more other RSU units (306).

12. The transportation management system of any one of claims 1-11, wherein said RSUs (306) comprise:
a) a sensing module that gathers traffic and related information;
b) a data processing module that provides vehicle-specific measurements, including but not limited to speed, headway, acceleration rate, deceleration rate, the distance between carriageway markings and vehicles, angle of vehicles and central lines, and overall traffic status;
c) a communication module that sends information from vehicles to point TCU (305);
d) a communication module that sends vehicle-specific driving instructions to vehicles;
e) an interface module that shows data that is sent to an OBU system; and
f) a power supply unit.

13. The transportation management system of any one of claims 1-12, comprising a vehicle sub-system (103, 307) comprising one or more modules for:
a) vehicle-control;
b) traffic detection and data collection;
c) wireless communication; and
d) data collection and communication.

14. The transportation management system of any one of claims 1-13, configured to redistribute essential vehicle driving tasks among vehicles comprising:
a) provide navigation instructions to vehicles;
b) provide guidance instructions and information to maintain safety, provide traffic control/road condition information, and provide special information;
c) fulfill vehicle maneuver tasks and monitor safety maintenance tasks if one or more components of the transportation management system fails;
d) provide data feeds for information exchange tasks at the control level to supplement and/or replace information provided by the vehicle sensors in a vehicle;
e) fulfill vehicle control tasks at the mechanical level, monitor surroundings, and stand-by as a backup system;
f) provide vehicles with driving-critical information;
g) fulfill driving tasks; and
h) use vehicles to provide backup functions to vehicles having errors or failures.

## Patentansprüche

1. Transportverwaltungssystem, das vollständige Fahrzeugoperationen und -steuerungen für verbundene und automatisierte Fahrzeug- und Fernverkehrsstraßensysteme durch Senden von detaillierten und zeitkritischen Steuerungsanweisungen für Fahrzeugverfolgung, Fahrspurwechsel, Routenführung und zugehörige Informationen an einzelne Fahrzeuge bereitstellt, wobei das Transportverwaltungssystem folgendes umfasst:
a) eine Hierarchie von Verkehrssteuerungszentren/Verkehrssteuerungseinheiten, TCCs/TCUs, (101), die Informationen verarbeiten und Verkehrsoperationsanweisungen erteilen, wobei die TCCs und TCUs automatische oder halbautomatisierte Rechenmodule sind, die Datenerhebung, Informationsverarbeitung, Netzwerkoptimierung und Verkehrssteuerung bereitstellen, mit einem oder mehreren makroskopischen TCCs (301), die mehrere Regionen und überregionale Verkehrssteuerung abdecken, einem oder mehreren regionalen TCCs (302), die Stadt- oder Stadtgebiet-Verkehrssteuerung abdecken, einem oder mehreren Korridor-TCCs (303), die Verkehrssteuerung für Korridore mit Verbindungsstraßen und Auf-/Ausfahrten abdecken, einem oder mehreren Segment-TCUs (304), die Straßensegment-Verkehrssteuerung abdecken, einem oder mehreren Punkt-TCUs (305), die Verkehrssteuerung für Autobahngebiete, Auf-/Ausfahrtmessung oder Kreuzungen abdecken, und einem Netzwerk (102) von Straßenrandeinheiten, RSUs, (306),
1) wobei die makroskopischen TCCs (301) Datenerhebung, Informationsverarbeitung und Netzwerkverkehr-Optimierung in großem Umfang bereitstellen, Informationen von den regionalen TCCs (302) verarbeiten und den regionalen TCCs (302) Steuerungsziele ausgeben;
2) wobei die regionalen TCCs (302) Datenerhebung, Informationsverarbeitung, städtischen Netzwerkverkehr und Verkehrssteuerungssignal-Optimierung bereitstellen, Informationen von den Korridor-TCCs (303) verarbeiten und den Korridor-TCCs (303) Steuerungsziele ausgeben;
3) wobei die Korridor-TCCs (303) Korridor-Datenerhebung, Verarbeitung, Verkehrseinfahr- und -ausfahrsteuerung und dynamische Verkehrsführung auf Autobahnen bereitstellen, Informationen von den makroskopischen TCUs und den Segment-TCUs (304) verarbeiten und den Segment-TCUs (304) Steuerungsziele ausgeben;
4) wobei die Segment-TCUs (304) Segment-Datenerhebung, Verarbeitung und lokale Verkehrssteuerung bereitstellen, Informationen von den Korridor-TCCs (303) und den Punkt-TCUs (305) verarbeiten und den Punkt-TCUs (305) Steuerungsziele bereitstellen; und
5) wobei die Punkt-TCUs (305) Datenerhebung, Verkehrssignalsteuerung und Verarbeitung von Fahrzeuganforderungen bereitstellen, Informationen von den Segment-TCUs (304) und den RSUs (306) verarbeiten und einer oder mehreren RSUs (306) fahrzeugbasierte Steuerungsanweisungen ausgeben;
b) wobei die RSU (306) einen Datenfluss von verbundenen Fahrzeugen empfängt, Verkehrsbedingungen detektiert und zielgerichtete Anweisungen an Fahrzeuge sendet, wobei das Netzwerk (102) von RSUs Datenerfassung, Datenverarbeitung, Steuerungssignalzuführung und Informationsverbreitung bereitstellt und wobei eine RSU (306) des RSU-Netzwerks(102) mit einer TCU kombiniert oder darin integriert werden kann;
c) ein Fahrzeuguntersystem (103, 307), mit einem gemischten Verkehrsfluss von Fahrzeugen bei verschiedenen Niveaus von Konnektivität und Automatisierung; und
d) Kommunikationssysteme (104), die sämtlichen Entitäten in dem Transportverwaltungssystem drahtgebundene und drahtlose Kommunikationsdienste bereitstellen.

2. Transportverwaltungssystem nach Anspruch 1, wobei das Transportverwaltungssystem konfiguriert ist, auf einem Abschnitt der verfügbaren Fahrspur oder auf sämtlichen der Fahrspuren einer Fernverkehrsstraße betriebsfähig zu sein.

3. Transportverwaltungssystem nach einem der Ansprüche 1-2, wobei Informationen für jedes einzelne Fahrzeug, das von dem System versorgt wird, kundenspezifisch gestaltet werden; die Informationen Wetter, Straßenbelagsbedingungen und geschätzte Fahrzeit umfassen; und die Informationen Fahrzeug-Steuerungsanweisungen umfassen, ausgewählt aus der Gruppe bestehend aus Geschwindigkeit, Beabstandung, Fahrspurzuweisung und Routenplanung.

4. Transportverwaltungssystem nach einem der Ansprüche 1-3, wobei Informationen von einer TCC/TCU einer oberen Ebene zu einer TCC/TCU einer unteren Ebene gesandt werden und eines oder mehrere von Folgendem umfassen:
a) eine wünschenswerte Geschwindigkeit;
b) eine wünschenswerte Beabstandung von Fahrzeugen;
c) ein wünschenswertes Verkehrsvolumen;
d) eine wünschenswerte Verkehrsaufteilung an Zugangspunkten; und
e) Verkehrssignal-Zeitplanungsparameter.

5. Transportverwaltungssystem nach einem der Ansprüche 1-4, wobei das System Hardware einsetzt, umfassend eines oder mehrere von Folgendem:
a) eine Leistungsversorgung;
b) Verkehrssensoren;
c) Module für drahtgebundene und drahtlose Kommunikation; und
d) eine Datenspeichervorrichtung und Datenbank.

6. Transportverwaltungssystem nach einem der Ansprüche 1-5, konfiguriert zur Verwendung mit einem Sensor, ausgewählt aus der Gruppe bestehend aus:
a) einem Mikrowellenradarsystem;
b) einem Induktionsschleifensystem;
c) einem Infrarotsystem;
d) einem Videokamerasystem; und
e) einem LiDAR-System.

7. Transportverwaltungssystem nach einem der Ansprüche 1-6, wobei die makroskopische TCC (301):
a) regionalen TCCs (302) Steuerungsziele bereitstellt;
b) zugehörige Daten von regionalen TCCs (302) erfasst;
c) historische Daten in einem Datenzentrum archiviert, um Informationsverarbeitung und einen strategischen Optimierer zu unterstützen;
d) ein automatisches oder halbautomatisiertes Rechenzentrum bereitstellt, das Datenerhebungs-, Informationsverarbeitungs-, Netzwerkoptimierungs- und Verkehrssteuerungssignale bereitstellt; und
e) mehrere regionale TCCs (302) in einem großflächigen Gebiet steuert und mit regionalen TCCs (302) unter Verwendung von hoher Volumenkapazität und Kommunikationsmedien niedriger Latenz kommuniziert.

8. Transportverwaltungssystem nach einem der Ansprüche 1-6, wobei die regionale TCC (302):
a) Korridor-TCCs (303) Steuerungsziele bereitstellt;
b) zugehörige Daten von Korridor-TCCs (303) erfasst;
c) historische Daten in einem Datenzentrum archiviert, um die Informationsverarbeitung und einen strategischen Optimierer zu unterstützen;
d) ein automatisches oder halbautomatisiertes Rechenzentrum bereitstellt, das Datenerhebungs-, Informationsverarbeitungs-, Netzwerkoptimierungs- und Verkehrssteuerungssignale für eine Region bereitstellt; und
e) mehrere Korridor-TCCs (303) innerhalb ihrer Abdeckung steuert und mit Korridor-TCCs (303) und einer makroskopischen TCC (301) unter Verwendung von hoher Volumenkapazität und Kommunikationsmedien niedriger Latenz kommuniziert.

9. Transportverwaltungssystem nach einem der Ansprüche 1-6, wobei die Korridor-TCC (303):
a) Segment-TCUs (304) Steuerungsziele bereitstellt;
b) zugehörige Daten von Segment-TCUs (304) erfasst;
c) Optimierer- und Prozessormodule zum Verarbeiten von Informationen und Bereitstellen von Steuerungszielen bereitstellt;
d) ein automatisches oder halbautomatisiertes Rechenzentrum bereitstellt, das Datenerhebungs-, Informationsverarbeitungs-, Netzwerkoptimierungs- und Verkehrssteuerungssignale für einen langen Fahrbahnkorridor bereitstellt; und
e) einen Rechenserver, ein Datenlager, Datenübertragungseinheiten und Rechenfähigkeit zur Verarbeitung von Bild- und Sensordaten bereitstellt.

10. Transportverwaltungssystem nach einem der Ansprüche 1-6, wobei die Segment-TCU (304):
a) Punkt-TCUs (305) Steuerungsziele bereitstellt;
b) zugehörige Daten von Punkt-TCUs (305) erfasst;
c) Optimierer- und Prozessormodule zum Verarbeiten von Informationen und Bereitstellen von Steuerungszielen bereitstellt;
d) Verkehrssteuerung für ein kleines Fahrbahngebiet bereitstellt; und
e) ein LAN-Datenvermittlungssystem und einen Ingenieur-Server enthält und mit der Punkt-TCC (305) unter Verwendung von drahtgebundenen und drahtlosen Kommunikationsmedien kommuniziert.

11. Transportverwaltungssystem nach einem der Ansprüche 1-6, wobei die Punkt-TCU (305):
a) RSUs (306) fahrzeugspezifische Steuerungsanweisungen bereitstellt;
b) zugehörige Daten von Punkt-RSUs (306) erfasst;
c) Optimierer- und Prozessormodule zum Verarbeiten von Informationen und Bereitstellen von Steuerungszielen bereitstellt; und
d) Verkehrssteuerung für eine kurze Distanz einer Fahrbahn, Auf-/Ausfahrtmessung oder Kreuzungen bereitstellt; und
e) mit einer oder mehreren anderen RSU-Einheiten (306) kommuniziert.

12. Transportverwaltungssystem nach einem der Ansprüche 1-11, wobei die RSUs (306) umfassen:
a) ein Erfassungsmodul, das Verkehrs- und zugehörige Informationen erhebt;
b) ein Datenverarbeitungsmodul, das fahrzeugspezifische Messungen bereitstellt, einschließlich von Geschwindigkeit, Vorwärtsfahrt, Beschleunigungsrate, Verlangsamungsrate, die Distanz zwischen Fahrbahnmarkierungen und Fahrzeugen, Winkel von Fahrzeugen und Mittellinien und gesamtem Verkehrsstatus, aber nicht darauf beschränkt;
c) ein Kommunikationsmodul, das Informationen von Fahrzeugen an Punkt-TCUs (305) sendet;
d) ein Kommunikationsmodul, das fahrzeugspezifische Fahranweisungen an Fahrzeuge sendet;
e) ein Schnittstellenmodul, das Daten anzeigt, die an ein OBU-System gesandt werden; und
f) eine Leistungsversorgungseinheit.

13. Transportverwaltungssystem nach einem der Ansprüche 1-12, umfassend ein Fahrzeuguntersystem (103, 307), umfassend ein oder mehrere Module für:
a) Fahrzeugsteuerung;
b) Verkehrsdetektion und Datenerfassung;
c) drahtlose Kommunikation; und
d) Datenerfassung und Kommunikation.

14. Transportverwaltungssystem nach einem der Ansprüche 1-13, konfiguriert zum Neuverteilen von wesentlichen Fahrzeugfahraufgaben unter Fahrzeugen, umfassend:
a) Bereitstellen von Navigationsanweisungen für Fahrzeuge;
b) Bereitstellen von Führungsanweisungen und Informationen zur Aufrechterhaltung von Sicherheit, Bereitstellen von Verkehrssteuerungs-/Straßenzustandsinformationen und Bereitstellen von speziellen Informationen;
c) Erfüllen von Fahrzeugmanövrieraufgaben und Überwachen von Sicherheitswartungsaufgaben, wenn eine oder mehrere Komponenten des Transportverwaltungssystems ausfallen;
d) Bereitstellen von Dateneinspeisungen für Informationsaustauschaufgaben auf der Steuerungsebene, um Informationen, die durch die Fahrzeugsensoren in einem Fahrzeug bereitgestellt werden, zu ergänzen und/oder zu ersetzen;
e) Erfüllen von Fahrzeugsteuerungsaufgaben auf der mechanischen Ebene, Überwachen von Umgebungen und Bereitschaft als ein Reservesystem;
f) Versehen von Fahrzeugen mit fahrkritischen Informationen;
g) Erfüllen von Fahraufgaben; und
h) Verwenden von Fahrzeugen zum Bereitstellen von Reservefunktionen für Fahrzeuge mit Fehlern oder Ausfällen.

## Revendications

1. Système de gestion de transport qui assure des opérations et un contrôle complets de véhicules pour des systèmes de véhicules et de routes connectés et automatisés en envoyant aux véhicules individuels des instructions de contrôle détaillées et sensibles au facteur temps pour un suivi de véhicules, un changement de voie, un guidage routier et des informations connexes, ledit système de gestion de transport comprenant :
a) une hiérarchie de centres de contrôle de trafic/unités de contrôle de trafic (TCC/TCU) (101), qui traitent des informations et donnent des instructions sur les opérations de trafic, lesdits TCC et TCU étant des modules de calcul automatiques ou semi-automatisés qui assurent une collecte de données, un traitement d'informations, une optimisation de réseau et un contrôle de trafic, comprenant un ou plusieurs TCC macroscopiques (301) couvrant plusieurs régions et un contrôle de trafic inter-régional, un ou plusieurs TCC régionaux (302) couvrant un contrôle de trafic en ville ou zone urbaine, un ou plusieurs TCC de corridor (303) couvrant un contrôle de trafic sur corridor avec bretelles d'accès et de raccordement, une ou plusieurs TCU de tronçon (304) couvrant un contrôle de trafic sur tronçon de voie, une ou plusieurs TCU de point (305) couvrant un contrôle de trafic sur autoroute, régulation de bretelles d'accès ou intersections, et un réseau (102) d'unités de bord de voie (RSU) (306),
1) lesdits TCC macroscopiques (301) assurant une collecte de données, un traitement d'informations et une optimisation de trafic de réseau à grande échelle, traitant des informations en provenance des TCC régionaux (302), et fournissant des cibles de contrôle aux TCC régionaux (302) ;
2) lesdits TCC régionaux (302) assurant une collecte de données, un traitement d'informations et une optimisation du trafic en réseau urbain et des signaux de contrôle de trafic, traitant des informations en provenance des TCC de corridor (303), et fournissant des cibles de contrôle aux TCC de corridor (303) ;
3) lesdits TCC de corridor (303) assurant une collecte et un traitement de données de corridor, un contrôle de trafic entrant et sortant et un guidage dynamique de trafic sur autoroute, traitant des informations en provenance des TCU macroscopiques et des TCU de tronçon (304), et fournissant des cibles de contrôle aux TCU de tronçon (304) ;
4) lesdits TCC de tronçon (304) assurant une collecte et un traitement de données de tronçon et un contrôle de trafic local, traitant des informations en provenance des TCC de corridor (303) et des TCU de point (305), et fournissant des cibles de contrôle aux TCU de point (305) ; et
5) lesdites TCU de point (305) assurant une collecte de données, un contrôle des signaux de trafic et un traitement des demandes de véhicules, traitant des informations en provenance des TCU de tronçon (304) et des RSU (306), et fournissant des instructions de contrôle basées sur le véhicule à une ou plusieurs RSU (306) ;
b) la RSU (306) recevant un flux de données en provenance de véhicules connectés, détectant des conditions de trafic, et envoyant des instructions ciblées à des véhicules, ledit réseau (102) de RSU assurant une détection de données, un traitement de données, une délivrance de signaux de contrôle et une distribution d'informations, et une RSU (306) du réseau de RSU (102) pouvant être combinée ou intégrée à une TCU ;
c) un sous-système de véhicules (103, 307) comprenant un flux de trafic mixte de véhicules à différents niveaux de connectivité et d'automatisation ; et
d) des systèmes de communication (104) qui fournissent des services de communication câblés et sans fil à toutes les entités du système de gestion de transport.

2. Système de gestion de transports selon la revendication 1, le système de gestion de transport étant configuré pour être opérationnel sur une partie de la voie de circulation disponible ou sur toutes les voies de circulation d'une route.

3. Système de gestion de transport selon l'une quelconque des revendications 1 et 2, dans lequel les informations sont personnalisées pour chaque véhicule desservi par le système ; lesdites informations comprennent des conditions météorologiques, l'état de la chaussée et la durée estimée du trajet ; et lesdites informations comprennent des instructions de contrôle de véhicule choisies dans le groupe constitué par une vitesse, un espacement, une désignation de voie de circulation et un acheminement.

4. Système de gestion de transport selon l'une quelconque des revendications 1 à 3, dans lequel les informations sont envoyées d'un TCC ou une TCU de niveau supérieur à un TCC ou une TCU de niveau inférieur et comprennent un ou plusieurs des éléments suivants :
a) une vitesse souhaitable ;
b) un espacement souhaitable des véhicules ;
c) un volume de trafic souhaitable ;
d) une répartition souhaitable du trafic aux points d'accès ; et
e) des paramètres de synchronisation des signaux de trafic.

5. Système de gestion de transport selon l'une quelconque des revendications 1 à 4, ledit système utilisant un matériel comprenant un ou plusieurs des éléments suivants :
a) une alimentation ;
b) des capteurs de trafic ;
c) des modules de communication câblés et sans fil ; et
d) un dispositif de stockage de données et une base de données.

6. Système de gestion de transport selon l'une quelconque des revendications 1 à 5, configuré pour être utilisé avec un capteur choisi dans le groupe constitué par :
a) un système radar à micro-ondes ;
b) un système à boucle inductive ;
c) un système infrarouge ;
d) un système de caméra vidéo ; et
e) un système LIDAR.

7. Système de gestion de transport selon l'une quelconque des revendications 1 à 6, dans lequel ledit TCC macroscopique (301) :
a) fournit des cibles de contrôle à des TCC régionaux (302) ;
b) collecte des données connexes auprès de TCC régionaux (302) ;
c) archive les données historiques dans un centre de données pour appuyer un traitement d'informations et un optimiseur de stratégie ;
d) fournit un centre de calcul automatique ou semi-automatisé qui assure une collecte de données, un traitement d'informations et une optimisation de réseau et fournit des signaux de contrôle de trafic ; et
e) contrôle de multiples TCC régionaux (302) dans une zone à grande échelle et communique avec des TCC régionaux (302) à l'aide de moyens de communication à grande capacité de volume et à faible latence.

8. Système de gestion de transport selon l'une quelconque des revendications 1 à 6, dans lequel ledit TCC régional (302) :
a) fournit des cibles de contrôle à des TCC de corridor (303) ;
b) collecte des données connexes auprès de TCC de corridor (303) ;
c) archive les données historiques dans un centre de données pour appuyer le traitement d'informations et un optimiseur de stratégie ;
d) fournit un centre de calcul automatique ou semi-automatisé qui assure une collecte de données, un traitement d'informations et une optimisation de réseau et fournit des signaux de contrôle de trafic pour une région ; et
e) contrôle de multiples TCC de corridor (303) dans sa zone de couverture et communique avec des TCC de corridor (303) et un TCC macroscopique (301) à l'aide de moyens de communication à grande capacité de volume et à faible latence.

9. Système de gestion de transport selon l'une quelconque des revendications 1 à 6, dans lequel ledit TCC de corridor (303) :
a) fournit des cibles de contrôle à des TCU de tronçon (304) ;
b) collecte des données connexes auprès de TCU de tronçon (304) ;
c) fournit des modules d'optimisation et de traitement pour traiter des informations et fournir des cibles de contrôle ;
d) fournit un centre de calcul automatique ou semi-automatisé qui assure une collecte de données, un traitement d'informations et une optimisation de réseau et fournit des signaux de contrôle de trafic pour un long corridor routier ; et
e) fournit un serveur de calcul, un entrepôt de données, des unités de transfert de données et une capacité de calcul pour le traitement de données d'images et de capteurs.

10. Système de gestion de transport selon l'une quelconque des revendications 1 à 6, dans lequel ladite TCU de tronçon (304) :
a) fournit des cibles de contrôle à des TCU de point (305) ;
b) collecte des données connexes auprès de TCU de point (305) ;
c) fournit des modules d'optimisation et de traitement pour traiter des informations et fournir des cibles de contrôle ;
d) assure un contrôle de trafic pour une petite zone routière ; et
e) contient un système de commutation de données LAN et un serveur d'ingénierie et communique avec le TCC de point (305) à l'aide de moyens de communication câblés ou sans fil.

11. Système de gestion de transport selon l'une quelconque des revendications 1 à 6, dans lequel ladite TCU de point (305) :
a) fournit à des RSU (306) des instructions de contrôle spécifiques de véhicules ;
b) collecte des données connexes auprès de RSU de point (306) ;
c) fournit des modules d'optimisation et de traitement pour traiter des informations et fournir des cibles de contrôle ; et
d) assure un contrôle de trafic pour une courte distance d'une chaussée, une régulation de bretelles d'accès ou des intersections ; et
e) communique avec une ou plusieurs autres unités RSU (306).

12. Système de gestion de transport selon l'une quelconque des revendications 1 à 11, dans lequel lesdites RSU (306) comprennent :
a) un module de détection qui collecte des informations de trafic et connexes ;
b) un module de traitement de données qui fournit des mesures spécifiques de véhicules, y compris, mais sans s'y limiter, une vitesse, un espacement, un taux d'accélération, un taux de décélération, la distance entre les marquages de la chaussée et les véhicules, un angle entre les véhicules et les lignes centrales, et l'état général du trafic ;
c) un module de communication qui envoie des informations de véhicules à un TCU de point (305) ;
d) un module de communication qui envoie à des véhicules des instructions de conduite spécifiques de véhicules ;
e) un module d'interface qui affiche des données qui sont envoyées à un système OBU ; et
f) une unité d'alimentation.

13. Système de gestion de transport selon l'une quelconque des revendications 1 à 12, comprenant un sous-système de véhicule (103, 307) comprenant un ou plusieurs modules pour :
a) un contrôle de véhicule ;
b) une détection de trafic et une collecte de données ;
c) une communication sans fil ; et
d) une collecte et une communication de données.

14. Système de gestion de transport selon l'une quelconque des revendications 1 à 13, configuré pour redistribuer des tâches essentielles de conduite de véhicules entre des véhicules, ce qui comprend les tâches suivantes :
a) fournir des instructions de navigation à des véhicules ;
b) fournir des instructions de guidage et des informations pour maintenir la sécurité, fournir des informations de contrôle de trafic/d'état des voies, et fournir des informations spéciales ;
c) exécuter des tâches de manœuvre de véhicule et surveiller des tâches de maintien de sécurité si un ou plusieurs composants du système de gestion de transport tombent en panne ;
d) fournir des flux de données pour des tâches d'échange d'informations au niveau du contrôle afin de compléter et/ou de remplacer les informations fournies par les capteurs de véhicule dans un véhicule ;
e) exécuter des tâches de contrôle de véhicule au niveau mécanique, surveiller l'environnement et se tenir prêt en tant que système de secours ;
f) fournir aux véhicules des informations essentielles à la conduite ;
g) exécuter des tâches de conduite ; et
h) utiliser des véhicules pour fournir des fonctions de secours aux véhicules présentant des erreurs ou des pannes.
